# EUROPÄISCHE PATENTSCHRIFT

(11) **EP 0 853 564 B1**
(45) Veröffentlichungstag und Bekanntmachung des Hinweises auf die Patenterteilung: **16.01.2002**
(21) Anmeldenummer: 97923798.9
(22) Anmeldetag: 10.05.1997
(51) Int. Cl.: B60S 1/38

(54) **WISCHBLATT FÜR SCHEIBEN VON KRAFTFAHRZEUGEN**
WIPER BLADE FOR MOTOR VEHICLE WINDSHIELDS
LAME D'ESSUIE-GLACE POUR VEHICULES A MOTEUR

(30) Priorität: 05.07.1996 DE 19627114
(43) Veröffentlichungstag der Anmeldung: 22.07.1998
(73) Patentinhaber: ROBERT BOSCH GMBH, 70442 Stuttgart (DE)
(72) Erfinder: MERKEL, Wilfried, D-77876 Kappelrodeck (DE); KOTLARSKI, Thomas, D-77830 Bühlertal (DE)
(86) Internationale Anmeldenummer: DE9700947
(87) Internationale Veröffentlichungsnummer: WO9801326

(56) Entgegenhaltungen:
- WO-A-95/23714
- DE-A- 3 827 875
- US-A- 3 192 551
- US-A- 3 659 310

## Beschreibung

### Stand der Technik

Die Erfindung geht aus von einem Wischblatt nach dem Oberbegriff des Anspruchs 1. Mit der US-A-3,659,310 ist ein Wischblatt bekannt geworden, bei dem der Anpreßdruck ausgehend vom Wischerarm über ein Tragbügelgestell auf eine Wischleiste übertragen wird. Die Wischleiste weist ein Tragelement auf, das von speziellen Krallen der untergeordneten Bügel des Tragbügelssystems gefaßt wird. Um die Wischleiste, insbesondere das Tragelement einfach austauschen zu können wird vorgeschlagen, das Tragelement haarnadelförmig auszugestalten und mit einer äußeren und einer inneren Rampe sowie mit einer äußeren Zahnstruktur im Bereich der inneren Rampe auszustatten. Mit der inneren Rampe wird der Wischgummi im Tragelement durch Einpressen der von außen wirkenden Kralle des Krallenbügels gehalten. Die äußere Rampe sowie die Zahnstruktur sind erforderlich um die Wischleiste innerhalb der Krallenbügel zu halten. Dieser Aufbau ist aufwendig und erfordert ein genaues Abstimmen der äußeren Rampe und der Zahnstruktur um eine gewisse Beweglichkeit des Wischgummis zu gewährleisten.

Bei einem anderen bekannten Wischblatt dieser Art (DE 26 14 457 A 1 oder US-A-3,192,551) ist das den Anpreßdruck des Wischblatts auf der Scheibe über die gesamte Länge der Wischleiste verteilende Tragelement mit einem schlitzartigen Längsdurchbruch versehen, durch welchen eine Längsrippe des Wischleistenkörpers von der einen Tragelementseite aus hindurchgreift wobei deren freies Ende so verdickt ist, daß es auf der anderen Seite eine Halterung oder Sicherung gegen unbeabsichtigtes Lösen der Wischleiste vom Tragelement bildet. Die Längsschienen des Tragelements kommen dabei in Längsnuten der Wischleiste zu liegen, welche an ihren Längsseiten einerseits durch den Körper der Wischleiste und andererseits durch die Verdickung der Längsrippe begrenzt sind. Zur Montage der Wischleiste am Tragelement muß die Wischleiste von Hand durch eine partielle Schlitzverbreiterung in dessen Längsschlitz eingefädelt werden, was aber sehr aufwendig und damit teuer ist.

### Vorteile der Erfindung

Durch die haarnadelförmige Ausbildung des Tragelements ergibt sich eine offene Mündung des Längsschlitzes an dem einen Ende des Tragelements, die eine einfache, gegebenenfalls auch automatische Montage der Wischleiste am Tragelement ermöglicht. Auch die Anordnung und Befestigung der als Massenteil gefertigten Klammer an den freien Enden der Längsschienen kann mittels eines Montageautomaten erfolgen.

Besonders einfach und damit kostengünstig läßt sich eine Querschnittsverringerung des Tragelements erreichen, wenn diese durch eine Verringerung der Breite des Tragelements realisiert ist wobei sich die größte Breite im Mittelabschnitt des Tragelements befindet.

Eine solche Querschnittsverringerung kann aber auch durch eine Verringerung der Dicke des Tragelements erreicht werden, wobei sich die größte Dicke im Mittelabschnitt des Tragelements befindet.

Je nach Auswahl des Materials für die Klammer des ausgebildeten Stabilisierungsmittels kann es zweckmäßig sein, wenn diese kraftschlüssig oder formschlüssig mit den Längsschienen verbunden ist. Selbstverständlich ist auch eine kraft- und formflüssige Verbindung möglich.

Für den Fall, daß die Längserstreckung des Tragelements ein bestimmtes Maß übersteigt, so daß sich eine gewisse Labilität der Längsschienen ergibt, kann die erforderliche Stabilität des Tragelements dadurch sicher gestellt werden, daß zwischen der an den freien Enden der Längsschienen angeordneten Klammer und einem die Basis der Haarnadelform bildenden Steg wenigstens eine weitere Zwischenklammer angeordnet ist, welche die voneinander abgewandten Längskanten der Längsschienen mit Krallenansätzen umgreift.

Eine weitere Vereinfachung des Wischblatts ergibt sich, wenn in Ausgestaltung der Erfindung die weitere Klammer mit einer Anschlußvorrichtung für den angetriebenen Wischerarm ausgestattet ist.

Wenn zumindest die Längsschienen des Tragelements aus Federbandstahl hergestellt sind kann ein besonders niedrig bauendes Wischblatt erzielt werden, das gute Eigenschaften hinsichtlich der vor der Windschutzscheibe vorhandenen Strömungsverhältnisse der anströmenden Luft aufweist.

Weitere Vorteile und Verbesserungen des Wischblatts sind der nachfolgenden Beschreibung eines Ausführungsbeispieles zu entnehmen, das anhand der Zeichnung erläutert wird.

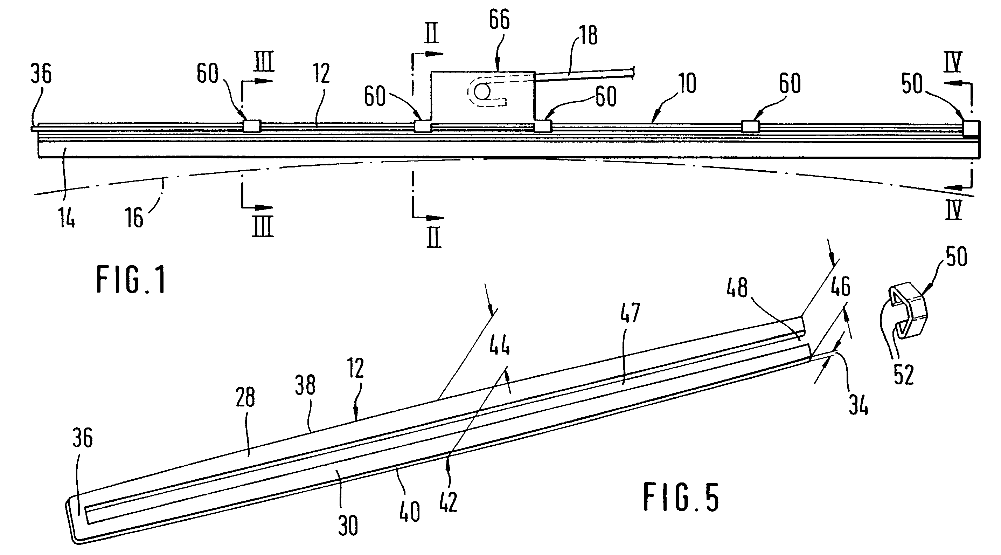

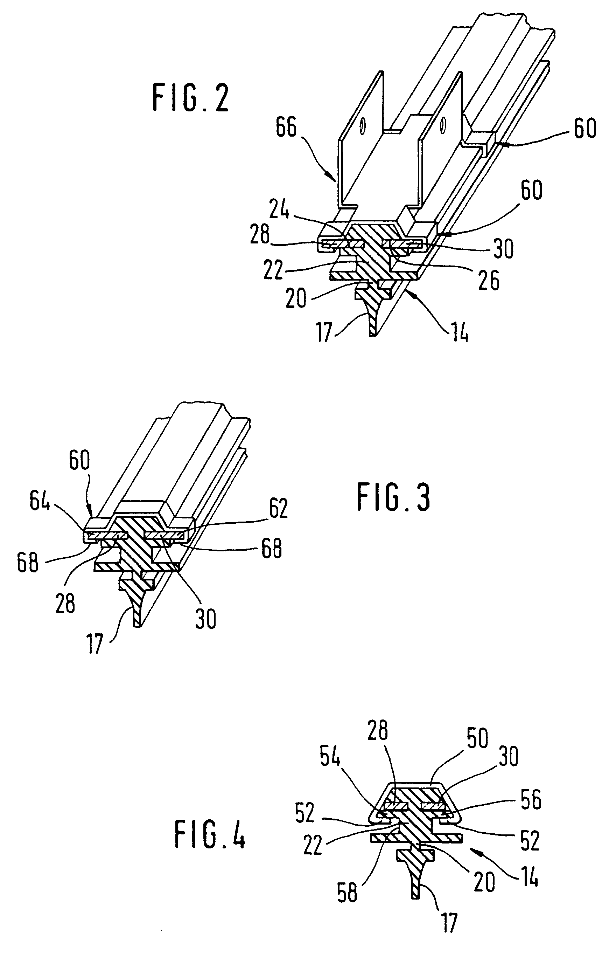

Es zeigen Figur 1 eine Seitenansicht eines erfindungsgemäßen Wischblatts, Figur 2 einen Schnitt durch das Wischblatt entlang der Linie II - II in Figur 1, mit einem perspektivisch dargestellten Mittelabschnitt des Wischblatts in vergrößerter Darstellung, Figur 3 einen Schnitt durch das Wischblatt entlang der Linie III - III in Figur 1, mit einem perspektivisch dargestellten Zwischenabschnitt, in vergrößerter Darstellung, Figur 4 die Schnittfläche eines Schnitts durch das Wischblatt entlang der Linie IV - IV in Figur 1, in vergrößerter Darstellung und Figur 5 eine perspektivische, unmaßstäbliche Darstellung eines zum Wischblatt gehörenden Tragelements und einer zu diesem gehörenden Klammer.

Ein in Figur 1 dargestelltes Wischblatt 10 weist eine elastisches, beim Ausführungsbeispiel aus Federbandstahl hergestelltes Tragelement 12 für eine aus einem gummiähnlichen Material gefertigte Wischleiste 14 auf. In Figur 1 ist das langgestreckte Wischblatt 10 der Einfachheithalber in einer Position gezeichnet, in der es sich in der Praxis nicht befinden kann, weil das elastische Tragelement so vorgespannt ist, daß die Wischleiste 14 gekrümmt ist, wie dies durch eine strichpunktierte Linie 16 in Figur 1 angedeutet ist. Diese Krümmung ist stärker als die maximale Krümmung der zu wischenden, in der Regel sphärisch gekrümmten Kraftfahrzeugscheibe. Das heißt, daß das Wischblatt 10 beim Anlegen an die zu wischende Scheibe zunächst mit seinen beiden Endbereichen an der Scheibe zur Anlage kommt bis schließlich auch der Mittelbereich des Wischblatts an der Scheibe anliegt. Die eben beschriebene Krümmung des Tragelements 12 und damit des Wischblatts 10 soll, bei sorgfältiger Abstimmung, eine möglichst gleichmäßige Verteilung des vom angetriebenen Wischerarm 18 bewirkten Anpreßdrucks gegen die Scheibe bewirken.

Der allgemeine Aufbau des Wischblatts 10 soll nun im folgenden anhand der Figuren 1 bis 3 erläutert werden. Die Wischleiste 14 hat eine an der Scheibe anlegbare Wischlippe 17, die über einen sogenannten Kippsteg 20 mit dem Körper 22 der Wischleiste 14 verbunden ist. In den beiden einander gegenüberliegenden Längsseiten des Wischleistenkörpers 22 sind einander gegenüberliegende Längsnuten 24 und 26 angeordnet, welche sich über die gesamte Länge der langestreckten Wischleiste 14 erstrecken. In den Längsnuten 24 und 26 sind Längsschienen 28 und 30 des Tragelements 12 untergebracht, dessen Aufbau aus Figur 5 ersichtlich ist. Beim Ausführungsbeispiel ist das Tragelement 12 aus einem Federbandstahl hergestellt. Es hat über seine gesamte Länge eine gleichmäßige Dicke 34. Das Tragelement 12 hat die Form einer Haarnadel. Die beiden Längsschienen 28 und 30 bilden dabei die Haarnadelschenkel, die an ihrem einen Ende durch einen einstückig mit den beiden Längsschienen verbundenen Steg 36 verbunden sind. Es ergibt sich somit ein einstückiges Bauelement, dessen Breite durch die voneinander abgewandten Längskanten 38 und 40 der Längsschienen 28 und 30 begrenzt ist. Die Ausbildung des Tragelements 12 ist so getroffen, daß es in seinem Mittelabschnitt 42 eine größere Breite 44 hat als die Breite 46 im Bereich der freien Enden der Längsschienen 28, 30 bzw. des Steges 36. Somit ergibt sich also eine Verringerung des Querschnitts der beiden Längsschienen von dem Mittelbereich 42 aus zu den Schienenenden hin. Diese Querschnittsverringerung kann aber auch durch eine Verringerung der Dicke der Längsschienenbei gleichbleibender oder bei sich verringernder Breite der Längsschienen - erreicht werden.

Die beschriebene Haarnadelform des Tragelements 12 sieht also vor, daß die beiden Längsschienen 28 und 30 parallel und mit Abstand voneinander angeordnet sind. Es ergibt sich somit in dem Tragelement 12 ein Längsschlitz 47, der im Bereich der freien Enden der Längsschienen 28 und 30 mündet. Diese Mündung 48 ermöglicht eine problemlose Montage der Wischleiste 14 und Tragelement 12. Dazu muß lediglich die Wischleiste 14 von der Mündung 48 her so auf das Tragelement 12 aufgeschoben werden, daß die beiden Längsschienen 28 und 30 in die Längsnuten 24 und 26 des Wischleistenkörpers 22 zu liegen kommen (Figuren 2 und 3). Dabei wird die Wischleiste 14 bis zum Steg 36 in das Tragelement eingeschoben. Zur Sicherung der Wischleiste 14 am Tragelement 12 ist auf die freien Enden der Längsleisten 28 und 30 eine als Stabilisierungsmittel wirkende Klammer 50 aufgebracht. Diese als separates Bauelement ausgebildete Klammer 50 umgreift einen Teil des Wischleistenkörpers 22 und untergreift mit Krallenansätzen 52 die in den Längsnuten 24 und 26 liegenden Längsschienen 28, 30 des Tragelements 12. Da durch die Verringerung der Breite 44, 46 des Tragelements diese Längsschienen im Bereich von deren freien Enden nicht mehr aus den Längsnuten 24, 26 ragen, greifen die Krallenansätze 52 nicht direkt unter die Längsschienen sondern sie untergreifen die unteren Wände 54 und 56 der Längsnuten 24 und 26, welche durch eine nutartige Längseinschnürung 58 des Wischleistenkörpers 22 gebildet sind. Durch zielgerichtetes Zusammendrücken der Klammer 50 wird eine gewisse Verformung des Wischleistenkörpers 22 erreicht, wodurch auch eine Sicherung des Tragelements 12 an der Wischleiste und eine Sicherung der zum Tragelement 12 gehörenden Klammer 50 an der Wischleiste 14 erreicht wird. Es ist jedoch auch eine formschlüssige Sicherung der Klammer 50 an den Längsschienen 28, 30 und/oder an der Wischleiste 14 denkbar.

Wenn die Länge des Wischblatts 10 und damit auch die Länge des haarnadelförmigen Tragelements 12 ein gewisses Maß übersteigt kann es zweckmäßig sein, zwischen den freien Enden der Längsschienen 28, 30 und dem die Basis der Haarnadelform bildenden Steg 36 Zwischenklammern 60 anzuordnen, die in den Figuren 1 bis 3 mit der Bezugszahl 60 versehen sind. Die Ausführung dieser sogenannten Zwischenklammern 60 entspricht im wesentlichen der schon beschriebenen Ausführung der Endklammer 50. Da jedoch diese Zwischenklammern im mittleren Bereich des Tragelements angeordnet sind (Figur 1), in dem die voneinander abgewandten Längskanten 38, 40 der Längsschienen aus den Längsnuten 24, 26 ragen, können Krallenansätze 68 dieser Zwischenklammern 60 die aus den Längsnuten ragenden Längsleisten 62, 64 der Längsschienen 28, 30 direkt umgreifen.

Eine weitere, vorteilhafte Ausgestaltung der Zwischenkrallen 60 ist aus den Figuren 1 und 2 ersichtlich. Dort sind zwei einander benachbarte Zwischenkrallen 60 zu einem einzigen Bauteil zusammengefaßt, da sie durch eine Anschlußvorrichtung 66 miteinander verbunden sind mit deren Hilfe das Wischblatt 10 an dem angetriebenen Wischerarm 18 in an sich bekannter Weise lösbar befestigt werden kann.

Es versteht sich von selbst, daß die schon erwähnte Änderung des Querschnitts der beiden Längsschienen 28, 30 bzw. des Tragelements 12 von dessen Mittelabschnitt 42 ausgehend den jeweiligen Gegebenheiten angepaßt werden muß, damit eine ordnungsgemäße Verteilung des Anpreßdrucks über die gesamte Wischblattlänge erreicht wird.

## Patentansprüche

1. Wischblatt (10) für Scheiben von Kraftfahrzeugen, mit einem elastischen, langgestreckten Tragelement (12) für eine langgestreckte, aus einem flexiblen Material bestehende, an der zu wischenden Scheibe anlegbaren Wischleiste (14), die an ihren Längsseiten einander gegenüberliegende Längsnuten (24, 26) aufweist, in denen mit Abstand voneinander angeordnete Längsschienen (28, 30) des Tragelements (12) liegen, das die Form einer Haarnadel aufweist, deren beiden Schenkel die Längsschienen (28, 30) bilden und deren freien Enden durch Stabilisierungsmittel (50) zusammengehalten, insbesondere miteinander verbunden sind, **dadurch gekennzeichnet, dass** die Stabilisierungsmittel (50) als separates Bauelement ausgebildet sind, dass der Mittelabschnitt (42) eine Anschlußvorrichtung (66) für einen angetriebenen Wischerarm (18) aufweist und dass sich der Querschnitt der beiden Längsschienen von deren Mittelbereich aus zu den Schienenenden hin verringert.

2. Wischblatt nach Anspruch 1, **dadurch gekennzeichnet, daß** die Querschnittsverringerung des Tragelements (12) durch eine Verringerung der Breite (44 bzw. 46) des Tragelements realisiert ist wobei sich die größte Breite (44) im Mittelabschnitt (42) des Tragelements (12) befindet.

3. Wischblatt nach einem der Ansprüche 1 oder 2, **dadurch gekennzeichnet, daß** die Querschnittsverringerung des Tragelements (12) durch eine Verringerung der Dicke (34) des Tragelements realisiert ist, wobei sich die größte Dicke (34) im Mittelabschnitt (42) des Tragelements (12) befindet.

4. Wischblatt nach einem der Ansprüche 1 bis 3, **dadurch gekennzeichnet, daß** die Stabilisierungsmittel als Klammer (50) ausgebildet und kraftschlüssig mit den Längsschienen (28, 30) des Tragelements (12) verbunden sind.

5. Wischblatt nach einem der Ansprüche 1 bis 3, **dadurch gekennzeichnet, daß** die Stabilisierungsmittel als Klammer (50) ausgebildet und formschlüssig mit mit den Längsschienen (28, 30) des Tragelements (12) verbunden sind.

6. Wischblatt nach einem der Ansprüche 1 bis 5, **dadurch gekennzeichnet, daß** zwischen der an den freien Enden der Längsschienen (28, 30) angeordneten Klammer (50) und einem die Basis der Haarnadelform bildenden Steg (36) wenigstens eine Zwischenklammer (60) angeordnet ist.

7. Wischblatt nach Anspruch 6, **dadurch gekennzeichnet, daß** die Klammer (50 bzw. 60) die voneinander abgewandten Längskanten (38, 40) der Längsschienen (28, 30) mit Krallenansätzen (68) umgreift.

8. Wischblatt nach einem der Ansprüche 6 oder 7, **dadurch gekennzeichnet, daß** die Zwischenklammer (60) mit einer Anschlußvorrichtung (66) für den Wischerarm (18) versehen ist.

9. Wischblatt nach einem der Ansprüche 1 bis 8, **dadurch gekennzeichnet, daß** das Tragelement (12) aus Federbandstahl hergestellt ist.

## Claims

1. Wiper blade (10) for windows/lens glasses of motor vehicles, having an elastic, elongated supporting element (12) for an elongated wiper strip (14) which consists of a flexible material, can be placed against the window/lens glass to be wiped and has, on its longitudinal sides, mutually opposite longitudinal grooves (24, 26) in which spaced apart longitudinal rails (28, 30) of the supporting element (12) lie, the said supporting element having the shape of a hair pin whose two limbs form the longitudinal rails (28, 30) and whose free ends are held together, in particular are connected to each other, by stabilizing means (50), **characterized in that** the stabilizing means (50) are designed as a separate component, **in that** the central section (42) has a connecting device (66) for a driven wiper arm (18), and **in that** the cross section of the two longitudinal rails is reduced from their central region towards the rail ends.

2. Wiper blade according to Claim 1, **characterized in that** the cross-sectional reduction of the supporting element (12) is realized by a reduction of the width (44 and 46) of the supporting element, in which case the greatest width (44) is situated in the central section (42) of the supporting element (12).

3. Wiper blade according to one of Claims 1 or 2, **characterized in that** the cross-sectional reduction of the supporting element (12) is realized by a reduction of the thickness (34) of the supporting element, in which case the greatest thickness (34) is situated in the central section (42) of the supporting element (12).

4. Wiper blade according to one of Claims 1 to 3, **characterized in that** the stabilizing means are designed as clips (50) and are connected frictionally to the longitudinal rails (28, 30) of the supporting element (12).

5. Wiper blade according to one of Claims 1 to 3, **characterized in that** the stabilizing means are designed as clips (50) and are connected in an interlocking manner to the longitudinal rails (28, 30) of the supporting element (12).

6. Wiper blade according to one of Claims 1 to 5, **characterized in that** at least one intermediate clip (60) is arranged between the clip (50), which is arranged on the free ends of the longitudinal rails (28, 30), and a web (36) which forms the base of the hair-pin shape.

7. Wiper blade according to Claim 6, **characterized in that** the clip (50 or 60) grips with claw-type projections (68) around the mutually remote longitudinal edges (38, 40) of the longitudinal rails (28, 30).

8. Wiper blade according to one of Claims 6 or 7, **characterized in that** the intermediate clip (60) is provided with a connecting device (66) for the wiper arm (18).

9. Wiper blade according to one of Claims 1 to 8, **characterized in that** the supporting element (12) is produced from spring band steel.

## Revendications

1. Balai d'essuie-glace (10) pour des vitres de véhicule, comprenant un raidisseur (12) allongé, élastique, pour recevoir une raclette (14), allongée, réalisée en une matière souple et destinée à s'appliquer contre la vitre à essuyer, cette raclette ayant dans ses grands côtés opposés, des rainures longitudinales (24, 26) recevant des rails longitudinaux (28, 30) du raidisseur (12), ces rails étant écartés l'un de l'autre, et ce raidisseur a une forme d'épingle à cheveux dont les deux branches sont formées par les rails longitudinaux (28, 30), les extrémités libres des branches étant maintenues réunies par un moyen de stabilisation (50) en étant notamment reliées l'une à l'autre,
**caractérisé en ce que**
le moyen de stabilisation (50) est constitué par un composant séparé, le segment central (42) comporte un dispositif d'accrochage (66) pour le bras d'entraînement (18) et la section des deux rails longitudinaux va en diminuant en partant de la zone centrale vers les extrémités des rails.

2. Balai d'essuie-glace selon la revendication 1,
**caractérisé en ce que**
la réduction de la section du raidisseur (12) est réalisée par une réduction de la largeur (44, 46) du raidisseur, la plus grande largeur (44) se trouvant au niveau du segment central (42) du raidisseur (12).

3. Balai d'essuie-glace selon l'une quelconque des revendications 1 ou 2,
**caractérisé en ce que**
la réduction de section du raidisseur (12) correspond à une réduction de l'épaisseur (34) de l'élément de support et la plus grande épaisseur (34) se trouve dans le segment central (42) du raidisseur (12).

4. Balai d'essuie-glace selon l'une quelconque des revendications 1 à 3,
**caractérisé en ce que**
les moyens de stabilisation sont réalisés sous la forme d'une pince (50) et les pinces sont reliées par une liaison par la force aux rails longitudinaux (28, 30) du raidisseur (12).

5. Balai d'essuie-glace selon l'une quelconque des revendications 1 à 3,
**caractérisé en ce que**
les moyens de stabilisation réalisés sous la forme de pinces (50) sont reliés par une liaison de forme aux rails longitudinaux (28, 30) du raidisseur (12).

6. Balai d'essuie-glace selon l'une quelconque des revendications 1 à 5,
**caractérisé par**
au moins une pince intermédiaire (60) entre les pinces (50) prévues aux extrémités libres des rails longitudinaux (28, 30) et l'entretoise (36) qui constitue la base de la forme d'épingle à cheveux.

7. Balai d'essuie-glace selon la revendication 6,
**caractérisé en ce que**
la pince (50, 60) entoure les arêtes longitudinales opposées (38, 40) des rails longitudinaux (28, 30) avec des griffes (68).

8. Balai d'essuie-glace selon l'une quelconque des revendications 6 ou 7,
**caractérisé en ce que**
la pince intermédiaire (60) est munie d'un dispositif d'accrochage (66) pour le bras d'entraînement (18).

9. Balai d'essuie-glace selon l'une quelconque des revendications 1 à 8,
**caractérisé en ce que**
le raidisseur (12) est réalisé dans un ruban d'acier à ressort.
